Europäisches Patentamt

European Patent Office

Office européen des brevets

(11) Numéro de publication: **0 181 805**

**A1**

(12) # DEMANDE DE BREVET EUROPEEN

(21) Numéro de dépôt: 85402063.3

(22) Date de dépôt: 23.10.85

(51) Int. Cl.⁴: **G 02 B 6/28**

(30) Priorité: 26.10.84 FR 8416372

(43) Date de publication de la demande:
21.05.86 Bulletin 86/21

(84) Etats contractants désignés:
DE FR GB

(71) Demandeur: LIGNES TELEGRAPHIQUES ET
TELEPHONIQUES L.T.T.
1, rue Charles Bourseul
F-78702 Conflans-Ste-Honorine(FR)

(72) Inventeur: Gouali, Mohamed
8 rue Jean Dolent
F-75014 Paris(FR)

(74) Mandataire: Weinmiller, Jürgen et al,
Zeppelinstrasse 63
D-8000 München 80(DE)

(54) Coupleur passif à fibres optiques.

(57) L'invention concerne un coupleur du type passif assurant la distribution d'informations sur des fibres optiques.

Ce coupleur se compose d'une fibre optique principale (2) dont une extrémité est couplée optiquement à deux fibres optiques secondaires (3, 4) accolées sur une partie de leur longueur, d'axes optiques parallèles à celui de la fibre principale, et biseautées en leurs extrémités et en sens contraires sous des angles $(\alpha', \alpha'')$ tels que l'ouverture numérique de chacune des fibres secondaires soit adaptée à celle de la fibre principale, de manière à réaliser un partage de l'énergie optique en sortie de la fibre principale en deux parties égales ou inégales.

Application aux systèmes de télécommunication sur fibres optiques.

## FIG_2

EP 0 181 805 A1

# COUPLEUR PASSIF A FIBRES OPTIQUES

La présente invention concerne un coupleur optique passif utilisé dans un système de liaison par fibres optiques.

Dans le domaine des transmissions optiques, on a l'habitude de classer les coupleurs optiques en deux catégories, à savoir :

1) Les coupleurs passifs qui sont des composants assurant la distribution d'informations par des fibres optiques. Ces coupleurs existent soit en version directionnelle, c'est-à-dire pour une distribution d'informations dans un seul sens de transmission, soit en version bidirectionnelle pour deux sens de transmission inverses l'un de l'autre. De tels composants sont qualifiés de passifs car les éléments actifs d'émission et de réception, à savoir les diodes photoémettrices et photodétectrices, ne font pas partie intégrante de ces composants.

2) Les coupleurs actifs qui sont des composants utilisés pour émettre et détecter différentes informations à une même extrémité d'une seule fibre optique de liaison bidirectionnelle. Ces composants sont qualifiés d'actifs car ils intègrent les éléments actifs d'émission et de réception.

A l'heure actuelle, les coupleurs tant passifs qu'actifs sont utilisés dans de nombreux domaines de liaisons par fibres optiques tels que par exemple la télématique, les transmissions téléphoniques ou les réseaux de télédistribution dans lesquels une station centrale communique avec des stations périphériques constituées par des appareils d'émission-réception d'abonnés.

En ce qui concerne plus particulièrement les coupleurs optiques passifs pour la distribution d'informations par fibres optiques, l'une des structures connues de ce type de composant en version par exemple directionnelle se compose de trois fibres optiques agencées en Y : tout d'abord, deux fibres secondaires identiques de branchement ou dérivation sont chacune abrasées en extrémité sur une partie de leur longueur et sur une certaine profondeur de coeur, puis sont accolées l'une à l'autre au niveau de leurs parties abrasées en extrémité, et l'ensemble des deux fibres accolées est ensuite fixé au moyen d'une résine d'indice de réfraction adapté sur l'une des extrémités d'une fibre principale de dimensions telles que le diamètre de son coeur soit égal au diamètre du cercle circonscrit aux coeurs des deux fibres secondaires une fois accolées.

Un tel coupleur est donc conçu pour partager l'énergie lumineuse transmise par la fibre principale en deux parties soit égales soit inégales (un quart et trois quarts ou un huitième et sept huitièmes par exemple) en jouant sur la profondeur d'abrasage de chacune des deux fibres secondaires. Ainsi, par exemple pour une répartition égale de l'énergie lumineuse dans chacune des deux branches, définissant ce qu'on appelle un coupleur à 3 dB, chaque fibre secondaire est abrasée longitudinalement à mi-coeur.

Toutefois, ce type de coupleur passif présente des inconvénients. En effet, comme la fibre est un élément fragile, celle-ci se fracture très souvent lorsqu'on effectue un abrasage au-delà de son demi-coeur. En conséquence, il s'avère très difficile de réaliser industriellement des coupleurs passifs autres qu'à 3 dB avec des fibres optiques abrasées. De plus, comme la répartition de l'énergie lumineuse en deux parties égales ou inégales est fonction de la profondeur d'abrasage du coeur de chacune des deux fibres de dérivation et comme les différentes fibres utilisées sont rendues solidaires les unes des autres, le coupleur obtenu se présente donc sous forme d'un module rigide opérant pour une seule répartition lumineuse déterminée à l'avance ; dès lors, à partir du même coupleur, il s'avère impossible de modifier à souhait le partage de l'énergie lumineuse pour chacune des deux fibres de dérivation du coupleur.

L'invention a pour but de pallier ces inconvénients en proposant un coupleur optique passif à fibres optiques qui est d'une conception simple et parfaitement industrialisable en se dispensant désormais de toute opération d'abrasage des fibres et qui assure avec un bon rendement le partage du rayonnement reçu en deux parties soit égales soit inégales avec n'importe quelles proportions désirées. En outre, à partir du même coupleur selon l'invention, il est possible de faire varier à volonté la répartition du rayonnement lumineux dans les fibres de dérivation.

A cet effet, l'invention a pour objet un coupleur comportant une fibre optique principale d'ouverture numérique donnée définissant un cône d'acceptance des rayons lumineux et deux fibres optiques secondaires d'ouvertures numériques respectives données définissant chacune un cône d'acceptance des rayons lumineux, les fibres secondaires ayant leurs extrémités couplées optiquement à l'une des extrémités de la fibre principale et étant accolées sur une partie de leur longueur à partir de leurs extrémités, présentant ainsi une génératrice commune d'accolement, l'axe longitudinal de chacune des deux fibres secondaires accolées étant parallèle à celui de la fibre principale et le diamètre du cercle circonscrit aux deux fibres secondaires étant inférieur ou égal au diamètre de la fibre principale, caractérisé en ce que les extrémités des deux fibres secondaires accolées sont disposées à une distance donnée de l'extrémité de couplage de la fibre principale et sont biseautées en des sens contraires sous des angles respectifs tels que les cônes d'acceptance des deux fibres secondaires soient compris dans le cône d'acceptance de la fibre principale.

On comprend que la répartition de l'énergie lumineuse dans chacune des deux fibres secondaires se fera non plus par adaptation du diamètre de coeur de chacune des fibres mais par adaptation de l'ouverture numérique de chacune des deux fibres secondaires à celle de la fibre principale en jouant sur les angles de biseautage des fibres secondaires.

Selon une autre caractéristique de l'invention, les différentes fibres optiques sont logées dans un boîtier et des moyens sont prévus pour déplacer, en agissant de l'extérieur du boîtier, la fibre principale en vue de modifier sa position vis-à-vis des extrémités accolées des deux fibres secondaires, ce qui permet de faire varier la répartition de l'énergie lumineuse dans chacune des deux fibres

4

secondaires.

D'autres caractéristiques et avantages de l'invention apparaîtront mieux dans la description détaillée qui suit et se réfère aux dessins annexés donnés uniquement à titre d'exemple et dans lesquels :

- la figure 1 représente une vue en coupe longitudinale du coupleur selon l'invention pour un partage de l'énergie lumineuse en deux parties égales ;

- la figure 2 représente une vue en coupe longitudinale du coupleur selon l'invention pour un partage de l'énergie lumineuse en deux parties inégales ;

- la figure 3 représente une vue en perspective du coupleur selon l'invention ; et

- la figure 4 représente une vue en coupe longitudinale du coupleur selon l'invention pour un partage de l'énergie lumineuse en deux parties inégales obtenues à partir d'un couplage à 3 dB.

Sur ces différentes figures, les mêmes références se rapportent aux mêmes éléments qui remplissent les mêmes fonctions en vue des mêmes résultats.

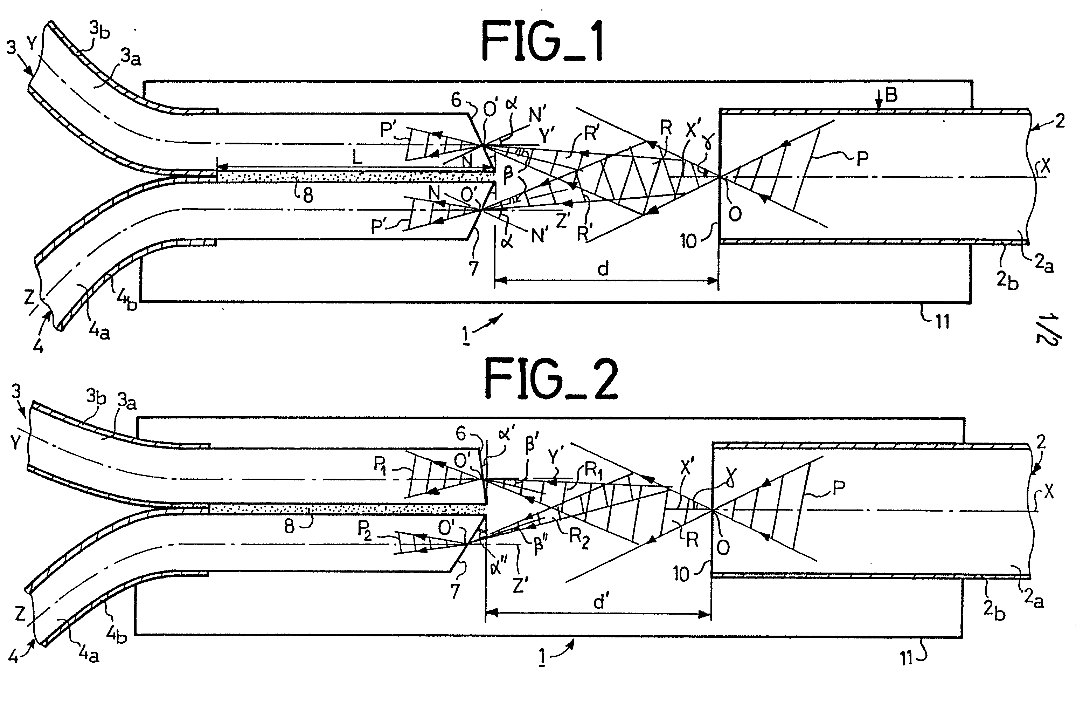

Sur la figure 1, on a représenté en 1 un coupleur optique passif en Y conforme à l'invention destiné à répartir ou partager un rayonnement émanant d'une fibre optique en deux parties égales, constituant ce qu'on appelle un coupleur à 3 dB.

Ce coupleur se compose de trois fibres optiques dont l'une dite principale 2, de coeur 2a et de gaine optique 2b, est par exemple une fibre de silice 100/140 microns du type multimode à saut d'indice, et dont les deux autres dites secondaires de dérivation 3 et 4, de coeurs respectifs 3a et 4a et de gaines optiques respectives 3b et 4b, sont par exemple des fibres identiques de silice 50/125 microns du type multimode à saut d'indice.

Pour réaliser l'agencement des deux fibres secondaires 3 et 4 entre elles, on commence par enlever leurs gaines optiques respectives sur une longueur L, par exemple de l'ordre de 7,5 mm, à partir de leurs faces dites d'entrée respectives 6 et 7. Les deux fibres sont ensuite mises longitudinalement en contact optique au niveau de leurs coeurs par encollage sur la longueur L au moyen d'une couche de résine 8 ayant un indice de réfraction adapté, c'est-à-dire égal ou voisin, aux indices de gaine optique et de coeur de chacune des deux fibres. Au niveau de leur encollement, les deux fibres présentent ainsi entre elles une génératrice commune dite d'accollement parallèle à leurs axes longitudinaux respectifs Y Y' et Z Z', tandis qu'au-delà de leur surface commune d'accolement les deux fibres sont faiblement recourbées en sens contraires.

On notera que la longueur de dégainage L est choisie de manière à ne pas accroître davantage la fragilisation des fibres et à permettre à la résine de capter une partie de l'énergie lumineuse reçue et de la répartir à l'intérieur des fibres au niveau de leurs gaines optiques, permettant ainsi d'obtenir le moins de pertes possibles.

Les deux fibres secondaires 3 et 4 une fois accolées sont ensuite couplées à la fibre principale 2 en disposant leurs faces d'entrée 6 et 7 en vis-à-vis de la face de sortie plane 10 de la fibre principale et à une distance donnée d, et en rendant parallèle et confondu l'axe longitudinal X X' de la fibre principale 2 avec la génératrice commune d'accolement des deux fibres secondaires 3 et 4. De plus, pour assurer la répartition de l'énergie lumineuse dans chacune des deux branches du coupleur, il va de soi que les fibres utilisées ont des dimensions telles que le diamètre du cercle circonscrit aux coeurs des deux fibres secondaires est inférieur ou égal au diamètre du coeur de la fibre principale.

Comme il apparaît sur la figure 1, les fibres optiques sont enfermées au niveau de leurs extrémités de couplage à l'intérieur d'un boîtier 11 de manière à réaliser un module compact.

A l'intérieur de la fibre principale 2 se propage un flux lumineux émis par une diode photoémettrice (non représentée) et destiné à être partagé en deux parties égales dans le cas du coupleur de la figure 1, et on a représenté symboliquement en P sur cette figure 1 le faisceau lumineux guidé dans la fibre principale 2 qui vient se projeter au centre O de sa face de sortie et en R le faisceau lumineux correspondant qui émerge de la face de sortie 10 selon un cône dit d'acceptance des rayons lumineux défini par l'ouverture numérique de la fibre 2. On rappelera que l'ouverture numérique d'une fibre est caractérisée par le sinus de l'angle au sommet du cône d'acceptance, soit sin $\gamma$ pour la fibre principale 2, et que tous les rayons méridiens à l'intérieur de ce cône sont guidés dans la fibre.

Selon un aspect de l'invention, on réalise la répartition de l'énergie lumineuse reçue en deux parties soit égales soit inégales en jouant sur la distance de couplage des fibres et en adaptant l'ouverture numérique de chacune des deux fibres secondaires à celle de la fibre principale. Cette adaptation des ouvertures numériques est obtenue en biseautant en des sens contraires les faces d'entrée des deux fibres secondaires sous des angles tels que les cônes d'acceptance des deux fibres secondaires soient compris dans le cône d'acceptance de la fibre principale, c'est-à-dire que le flux lumineux en sortie de la fibre principale soit reçu en entier dans les cônes des deux fibres secondaires pour y être ensuite guidé.

Ainsi, dans le cas du coupleur représenté sur la figure 1 qui correspond à un coupleur à 3 dB assurant un partage égal de l'énergie lumineuse dans chacune des deux branches, les deux fibres secondaires 3 et 4 sont chacune biseautées en extrémité, mais en des sens contraires, sous le même angle $\alpha$ formé entre leur axe lon-longitudinal et la normale N N' à leur face d'entrée, les deux fibres secondaires accolées présentant ainsi en extrémité une forme en toit centré sur leur génératrice commune d'accolement.

Comme cela est bien connu, le fait de biseauter une fibre optique permet d'obtenir en sortie de la fibre un déport du faisceau lumineux par rapport à l'axe longitudinal de la fibre qui est d'autant plus important que l'angle de biseautage est grand, et il est possible de définir une ouverture numérique moyenne de la fibre en la caractérisant par un cône d'acceptance des rayons lumineux avec un angle au sommet qui est d'autant plus grand que le déport du faisceau est faible.

Ainsi, en biseautant en des sens contraires les deux fibres secondaires selon des angles appropriés, on obtient en sortie des fibres des déports de faisceaux lumineux qui pénètrent dans le cône d'acceptance de la fibre principale, assurant ainsi l'adaptation des ouvertures numériques des différentes fibres, et en choisissant des angles de biseautage et une distance de couplage appropriés, on obtient la répartition désirée de l'énergie lumineuse dans chacune des fibres secondaires. On a volontairement exagéré sur la figure 1 la distance de couplage $\underline{d}$ entre les fibres dans un souci de clarté.

Sur la figure 1, on a représenté symboliquement en R' les deux mêmes faisceaux lumineux qui sont reçus dans les cônes d'acceptance d'acceptance de même angle au sommet β des deux fibres de dérivation et qui viennent se projeter au centre O' de leurs faces d'entrée respectives, et en P' les deux mêmes faisceaux pénétrant respectivement dans les deux fibres 3 et 4 pour s'y propager tout en étant guidés. Après propagation, ces flux lumineux partagés sont ensuite détectés par des diodes photodétectrices (non représentées) couplées aux fibres secondaires.

A titre illustratif, un partage de l'énergie lumineuse véhiculée par la fibre principale en deux parties égales a été obtenu par la Demanderesse avec une fibre principale 100/140 microns à saut d'indice pour laquelle l'ouverture numérique est de l'ordre de 0,30 et deux fibres secondaires 50/125 microns à saut d'indice, et avec un angle de biseautage α de chacune des deux fibres secondaires égal à 20° et une distance $\underline{d}$ de l'ordre de 30 microns.

La figure 2 représente le coupleur passif selon l'invention pour un partage du rayonnement émanant de la fibre principale 2 en deux parties inégales, comme par exemple 70% de l'énergie lumineuse dans la fibre 3 et 30% dans la fibre 4.

A cet effet, les faces d'entrée 6 et 7 des deux fibres de dérivation 3 et 4 sont biseautées en sens contraires respectivement sous des angles différents α' et α" tels que leurs ouvertures numériques moyennes respectives soient adaptées à celle de la fibre principale 2 comme on l'a expliqué précédemment et tels que l'énergie lumineuse en sortie de la fibre principale soit reçue à 70% dans la fibre secondaire 3 d'une part et à 30% dans la fibre 4 d'autre part. Comme précédemment, la distance de couplage $\underline{d}'$ entre les fibres intervient également pour distribuer l'énergie lumineuse dans les deux fibres secondaires selon les proportions désirées.

Sur la figure 2, on a représenté symboliquement en $R_1$ le faisceau lumineux reçu dans un cône d'acceptance d'angle au sommet $\beta'$ et qui représente 70% du flux lumineux P véhiculé par la fibre principale 2, et en $R_2$ le faisceau lumineux reçu dans un cône d'acceptance d'angle au sommet $\beta''$ et qui représente 30% du flux lumineux P. Ces deux faisceaux $R_1$ et $R_2$ sont déportés respectivement par rapport aux axes longitudinaux des deux fibres 3 et 4 avec un déport plus important pour le faisceau $R_2$ que pour le faisceau $R_1$, en raison d'un angle de biseautage $\alpha''$ de la fibre 4 plus grand que celui $\alpha'$ de la fibre 3, dans le but d'obtenir les proportions recherchées du partage du flux lumineux. On a également représenté symboliquement en $P_1$ le faisceau lumineux pénétrant dans la fibre 3 pour s'y propager en étant guidé et représentant 70% de l'énergie optique et en $P_2$ le faisceau lumineux guidé à l'intérieur de la fibre 4 et représentant 30% de l'énergie optique reçue.

A titre illustratif, avec une fibre principale 100/140 microns à saut d'indice, d'ouverture numérique de l'ordre de 0,30, et deux fibres secondaires 50/125 microns également à saut d'indice, le partage de l'énergie lumineuse en 70% dans la fibre 3 et en 30% dans la fibre 4 a été obtenu par la Demanderesse pour des angles de biseautage $\alpha'$ de l'ordre de 15° et $\alpha''$ de l'ordre de 50° et pour une distance $\underline{d}'$ de l'ordre de 30 microns.

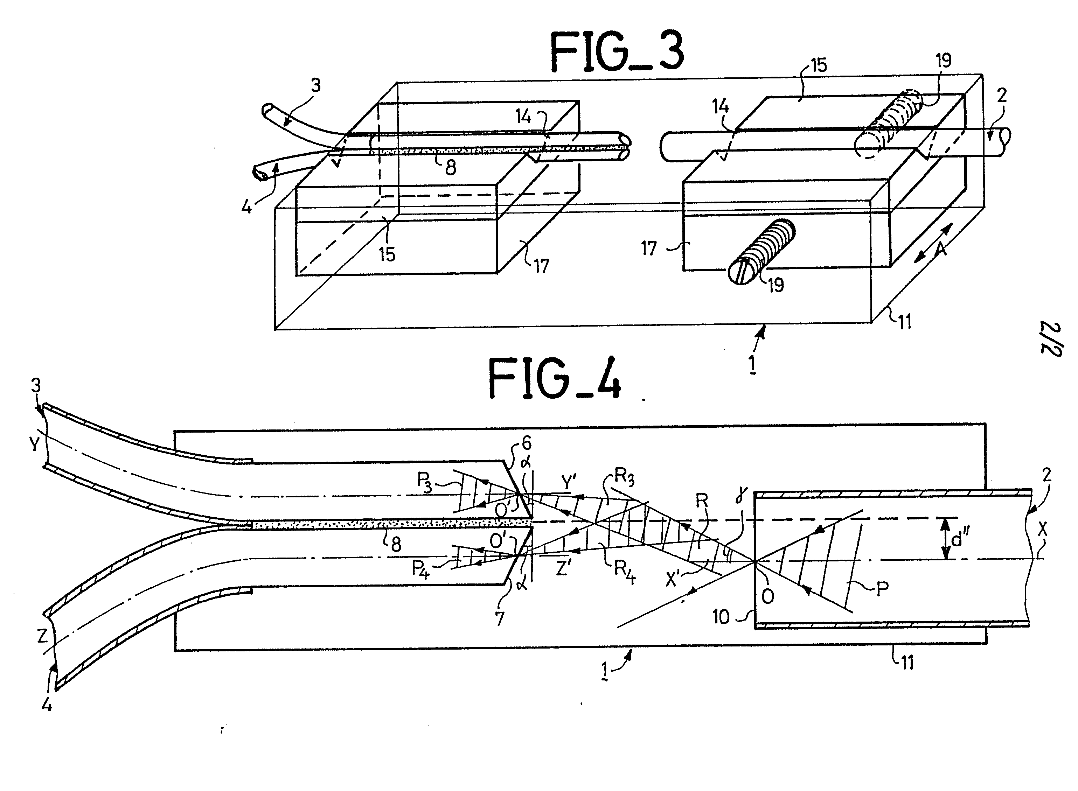

La figure 3 représente une vue schématique en perspective du coupleur passif selon l'invention. Pour maintenir en place les trois fibres constituant le coupleur, celles-ci sont positionnées longitudinalement du côté de leurs extrémités de couplage dans des rainures 14 en V pratiquées dans des blocs parallélépipèdiques 15 en silicium par exemple. Ces blocs sont disposés en regard l'un de l'autre à l'intérieur du boîtier 11 et sont rapportés fixement sur des supports 17 en verre par exemple.

Comme il apparaît sur cette figure, des moyens de déplacement de la fibre principale 2 selon une direction perpendiculaire à son axe longitudinal sont prévus de manière à modifier sa position de couplage vis-à-vis des deux autres fibres accolées 3 et 4. Ces moyens de déplacement sont constitués par exemple par deux vis 19 montées respectivement à travers les deux parois opposées du boîtier parallèles à l'axe longitudinal du coupleur et susceptibles de venir chacune, par micromanipulation de l'extérieur, en appui sur le bloc support de la fibre principale 2 de façon à la déplacer transversalement dans un sens ou dans l'autre, comme représenté en A sur la figure 3.

Au sein du coupleur, ces moyens de déplacement ont pour but de faire varier le couplage entre les fibres par décentrement de ces dernières, et donc de modifier la répartition de l'énergie lumineuse dans chacune des deux fibres de dérivation, comme on va maintenant le montrer en référence à la figure 4.

Cette figure 4 représente en effet un coupleur assurant le partage du flux lumineux émanant de la fibre principale 2 en deux parties inégales, par exemple 70% de l'énergie optique dans la fibre 3 et 30% dans la fibre 4, qui est obtenu à partir du coupleur à 3 dB selon la figure 1 en effectuant un décentrement de la fibre principale 2 par déplacement selon la flèche B (figure 1) à l'aide d'une des deux vis 19 (figure 3).

Ce décentrement de la fibre principale 2 par rapport aux deux fibres secondaires 3 et 4 biseautées sous le même angle $\alpha$ (coupleur à 3 dB), et repéré en $\underline{d}''$ par la distance entre l'axe longitudinal de la fibre principale et la génératrice commune d'accolement des deux fibres secondaires, provoque une modification de l'adaptation de chacune des ouvertures numériques moyennes des deux fibres secondaires avec celle de la fibre principale, en ce sens que l'ouverture numérique moyenne de la fibre secondaire 3 est mieux adaptée c'est-à-dire plus compatible avec celle de la fibre principale 2 que ne peut l'être l'ouverture numérique moyenne de la fibre secondaire 4.

Pour obtenir avec exactitude les proportions désirées du partage de l'énergie optique en deux parties inégales, 70% et 30% dans l'exemple choisi, à partir d'un couplage à 3 dB, la distance $\underline{d}"$ est ajustée en mesurant la puissance optique en sortie de chacune des deux fibres secondaires.

La fibre secondaire **3** est donc couplée à la fibre principale 2 de manière à recevoir 70% de l'énergie optique véhiculée par la fibre principale, tandis que la fibre secondaire 4 est couplée avec plus de pertes à la fibre principale de manière à ne recevoir que 30% de l'énergie optique.

Sur la figure 4, on a illustré symboliquement en $R_3$ le flux lumineux reçu par la fibre secondaire 3 et en $P_3$ le flux lumineux correspondant pénétrant dans cette fibre pour s'y propager en étant guidé et représentant 70% de l'énergie optique. De même, on a illustré en $R_4$ le faisceau lumineux reçu par la fibre secondaire 4 et en $P_4$ le faisceau lumineux correspondant guidé à l'intérieur de cette fibre et représentant 30% de l'énergie optique.

A titre illustratif, une distance $\underline{d}"$ de l'ordre de 20 microns permet de transformer le coupleur à 3 dB selon la figure 1 ($\alpha$ égal à 20°) en un coupleur distribuant 70% de l'énergie lumineuse dans la fibre 3 et 30% dans la fibre 4.

On notera que la description ci-dessus a été faite en référence à un coupleur assurant le partage d'un flux lumineux en deux parties égales ou inégales. Bien entendu, ce coupleur peut également assurer le mélange dans la fibre principale de deux flux lumineux véhiculés respectivement par les deux fibres secondaires : à cet effet, la description des figures est à la portée de l'homme du métier en inversant simplement le sens des flèches des différents faisceaux lumineux représentés sur les figures.

## REVENDICATIONS

1 - Coupleur comportant une fibre optique principale (2) d'ouverture numérique donnée définissant un cône d'acceptance des rayons lumineux et deux fibres optiques secondaires (3, 4) d'ouvertures numériques respectives données définissant chacune un cône d'acceptance des rayons lumineux, les fibres secondaires ayant leurs extrémités (6, 7) couplées optiquement à l'une (10) des extrémités de la fibre principale et étant accolées sur une partie de leur longueur à partir de leurs extrémités, présentant ainsi une génératrice commune d'accolement, l'axe longitudinal de chacune des deux fibres secondaires accolées étant parallèle à celui de la fibre principale et le diamètre du cercle circonscrit aux deux fibres secondaires étant inférieur ou égal au diamètre de la fibre principale, caractérisé en ce que les extrémités des deux fibres secondaires accolées (3, 4) sont disposées à une distance donnée de l'extrémité de couplage de la fibre principale (2) et sont biseautées en des sens contraires sous des angles respectifs tels que les cônes d'acceptance des deux fibres secondaires soient compris dans le cône d'acceptance de la fibre principale.

2 - Coupleur selon la revendication 1, caractérisé en ce que la fibre principale (2) du côté de son extrémité de couplage et l'ensemble des deux fibres secondaires (3, 4) du côté de leurs extrémités accolées sont placés respectivement dans deux rainures (14) en V pratiquées longitudinalement dans deux blocs supports (15), et en ce que les deux blocs supports sont disposés sensiblement en regard l'un de l'autre à l'intérieur d'un boîtier (11).

3 - Coupleur selon l'une des revendications 1 ou 2, caractérisé en ce que l'axe longitudinal de la fibre principale (2) est parallèle et confondu avec la génératrice commune d'accolement des deux fibres secondaires (3, 4).

4 - Coupleur selon la revendication 2, caractérisé en ce que le boîtier (11) comporte des moyens (19) de déplacement de la fibre principale (2) selon une direction perpendiculaire à son axe longitudinal de façon à modifier la position de la fibre principale vis-à-vis des extrémités accolées des deux fibres secondaires.

5 - Coupleur selon l'une des revendications précédentes, caractérisé en ce que les deux fibres secondaires (3, 4) sont chacune dépourvues de leur gaine optique (3b, 4b) au niveau de la génératrice commune d'accolement.

6 - Coupleur selon la revendication 5, caractérisé en ce qu'à l'endroit de la génératrice commune d'accolement, les deux fibres secondaires (3, 4) sont en contact optique l'une avec l'autre au moyen d'une couche de résine (8) d'indice de réfraction adapté aux indices de la gaine optique (3b, 4b) et du coeur (3a, 4a) de chacune des deux fibres secondaires.

1/2

FIG_1

FIG_2

FIG_3

FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | FR-A-2 360 899 (CORNING GLASS WORKS) * Page 4, lignes 11-17; page 4, ligne 29 - page 5, ligne 10; page 5, ligne 38 - page 6, ligne 30; figures 2,4-6 * | 1,3-6 | G 02 B 6/28 |
| A | PATENTS ABSTRACT OF JAPAN, vol. 4, no. 10, 25 janvier 1980, page 151 E 167; & JP - A - 54 151 048 (OKI DENKI KOGYO K.K.) 27.11.1979 * En entier * | 1-3 | |
| A | DE-A-2 910 637 (LICENTIA PATENT-VERWALTUNGS-GmbH) * Page 3, ligne 18 - page 4, ligne 23; figures 1a et 1b * | 1,3 | |
| A | PATENTS ABSTRACTS OF JAPAN, vol. 7, no. 60, 12 mars 1983, page 29 P 182; & JP - A - 57 205 708 (MITSUBISHI RAYON K.K.) 16.12.1982 * En entier * | 1 | DOMAINES TECHNIQUES RECHERCHES (Int Cl.4) G 02 B |
| A | THE TRANSACTIONS OF THE IECE OF JAPAN, vol. E-60, no. 3, mars 1977, pages 133-134; T. MATSUI et al.: "Optical branch for optical data distribution" * Figure 1 * | 1 | |

Le présent rapport de recherche a été établi pour toutes les revendications

| Lieu de la recherche | Date d'achèvement de la recherche | Examinateur |
|---|---|---|
| LA HAYE | 07-02-1986 | MORRELL D.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82